(19) **Europäisches Patentamt European Patent Office Office européen des brevets**

(11) **EP 1 846 582 B1**

(12) **FASCICULE DE BREVET EUROPEEN**

(45) Date de publication et mention de la délivrance du brevet:
**17.06.2009 Bulletin 2009/25**

(51) Int Cl.:
*C21D 1/76* (2006.01)        *C21D 1/613* (2006.01)
*B01D 53/62* (2006.01)

(21) Numéro de dépôt: **05824410.4**

(22) Date de dépôt: **06.12.2005**

(86) Numéro de dépôt international:
**PCT/FR2005/051042**

(87) Numéro de publication internationale:
**WO 2006/064146 (22.06.2006 Gazette 2006/25)**

(54) **PROCEDE D'EPURATION D'UN MELANGE ENTRANT COMPORTANT DU DIOXYDE DE CARBONE (CO2) ET DU MONOXYDE DE CARBONE (CO), EN VUE DE L'ELIMINATION DU MONOXYDE DE CARBONE (CO) CONTENU DANS CE MELANGE**

VERFAHREN ZUR REINIGUNG EINES KOHLENDIOXID (CO2) UND KOHLENMONOXID (CO) ENTHALTENDEN EINSATZGEMISCHS ZUR ENTFERNUNG DES DARIN ENTHALTENEN KOHLENMONOXIDS

METHOD FOR PURIFYING AN INPUT MIXTURE COMPRISING CARBON DIOXIDE (CO2) AND CARBON MONOXIDE (CO), TO ELIMINATE THE CARBON MONOXIDE CONTAINED IN SAID MIXTURE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.12.2004 FR 0453014**

(43) Date de publication de la demande:
**24.10.2007 Bulletin 2007/43**

(73) Titulaire: **L'AIR LIQUIDE, SOCIETE ANONYME POUR L'ETUDE ET L'EXPLOITATION DES PROCEDES GEORGES CLAUDE 75321 Paris Cédex 07 (FR)**

(72) Inventeurs:
• **GARY, Daniel F-78180 Montigny Le Bretonneux (FR)**
• **CHAFFOTTE, Florent F-92320 Chatillon (FR)**
• **GOUHINEC, Florence F-78000 Versailles (FR)**
• **RIDLOVA, Martina F-92340 Bourg La Reine (FR)**

(56) Documents cités:
EP-A- 1 211 329         WO-A-03/068998
DE-A1- 10 251 486       FR-A- 2 863 628

• DATABASE WPI Section Ch, Week 198647 Derwent Publications Ltd., London, GB; Class E36, AN 1986-308735 XP2376677 & JP 61 227842 A (JAPAN TOBACCO & SALT PUBLIC) 9 octobre 1986 (1986-10-09)

**Description**

Procédé d'épuration d'un mélange entrant comportant du dioxyde de carbone ($CO_2$) et du monoxyde de carbone (CO), en vue de l'élimination du monoxyde de carbone (CO) contenu dans ce mélange.

La présente invention concerne un procédé permettant l'épuration d'un mélange gazeux comportant du dioxyde de carbone ($CO_2$) et de l'hélium (He) par élimination du monoxyde de carbone (CO) contenu également dans ce mélange.

L'utilisation de mélanges gazeux contenant du $CO_2$, tels les mélanges $CO_2$-He, est connue pour leurs propriétés de transfert thermique, notamment dans des procédés de trempe gazeuse de pièces métalliques. Dans un tel contexte, la formation de CO y est favorisée, tout simplement du fait de la réactivité du $CO_2$ à haute température (au-delà de 500°C).

Mais par ailleurs, la présence de l'hélium dans un tel gaz, justifie et rend généralement nécessaire, pour des raisons économiques, le recyclage du gaz de trempe. Ce recyclage peut se traduire par une accumulation d'impuretés tels que le CO.

Cette présence de CO peut poser des problèmes en cas de fuite de gaz sur le système de recyclage, du fait de la toxicité bien connue du CO. La valeur limite d'exposition (VME) au CO en France est actuellement de 50 ppm de CO, mais à partir du 1er janvier 2005, cette VME passera on le sait à 10 mg/m[3].

On comprend dès lors qu'il serait avantageux de pouvoir proposer un procédé permettant l'élimination du monoxyde de carbone d'un mélange gazeux comportant du $CO_2$ et de l'hélium.

La trempe gazeuse des aciers ayant subit au préalable un traitement thermique sous vide (chauffage avant trempe, recuit, revenu...) ou thermochimique (cémentation, carbonitruration...) est généralement réalisée avec un gaz sous pression, préférentiellement entre 4 et 20 bars. Le gaz peut-être de l'azote, de l'air, de l'argon, du $CO_2$, des mélanges à base d'hélium ou tout autre gaz ou mélange gazeux industriel et est généralement alimenté à partir d'un stockage temporaire ou capacité tampon, où le gaz est maintenu sous une pression supérieure à la pression de trempe souhaitée, soit typiquement 30 à 40 bar pour une trempe à 20 bar.

Un cycle de trempe après cémentation sous vide se décompose traditionnellement de la façon suivante :

- État initial de l'installation : la chambre où est effectuée la trempe est initialement sous vide, c'est-à-dire sous une pression comprise généralement entre 1 et 20 mbar ; la charge à tremper est à l'intérieur de la chambre.
- Introduction du gaz de trempe : le remplissage de la chambre de trempe à l'aide du gaz de trempe permet d'augmenter la pression jusqu'à la pression de trempe dans une durée de quelques secondes par équilibrage des pressions avec le stockage tampon ; le gaz injecté est recirculé pendant toute la durée de la trempe, puis évacué en fin de trempe.

Les améliorations apportées ces dernières années aux procédés de refroidissement rapide des aciers ont essentiellement consisté en l'utilisation de fluides aux meilleures propriétés d'échange de chaleur telles que l'hélium et l'hydrogène, de mélanges d'un gaz inerte avec un gaz plus léger ($N_2$-$H_2$, $N_2$-He,..), en l'augmentation des pressions de gaz et des vitesses de circulation dans l'enceinte sous pression. En parallèle, les technologies des cellules de trempe ont été également améliorées: augmentation des pressions de fonctionnement, de la capacité des échangeurs de chaleur, etc.....

Certains gaz tels que le $CO_2$, utilisés en mélange, en particulier avec de l'hélium, permettent d'améliorer les vitesses de refroidissement des pièces d'acier. Toutefois, le contact entre le $CO_2$ et les pièces chaudes à tremper peut se traduire par la formation de CO issu d'une réduction chimique du $CO_2$. L'accumulation du CO formé est particulièrement indésirable et risque de se produire dans le cas où le gaz devrait être recyclé (en effet lorsque l'on ne procède à aucun recyclage le gaz de trempe est tout simplement évacué vers l'extérieur et ne risque donc aucune accumulation).

Les installations permettant le recyclage du gaz de trempe proposent parfois des moyens d'épuration des impuretés, dans le cas par exemple où la trempe ne suit pas un traitement sous vide. Les moyens proposés pour épurer les gaz de trempe recyclés sont généralement à base de membranes ; mais celles-ci présentent l'inconvénient de provoquer une perte de charge importante dans le gaz, cette perte de charge se traduit généralement par l'emploi d'un compresseur dédié et par une consommation d'énergie accrue.

D'autres documents proposent des méthodes d'épuration du $CO_2$ (en présence ou non d' Hélium) visant à éliminer le CO. Les méthodes proposées dans ce cas sont des réactions chimiques produisant l'oxydation du CO par un agent gazeux sur un catalyseur. On se reportera par exemple aux documents :

- EP-1 060 774, qui propose d'éliminer (entre autres) CO et $CO_2$ de l'air. Le CO est oxydé en $CO_2$ par une oxydation catalytique en présence de catalyseurs à base de métal précieux tel Pd, Os, Ir, Rh, Ag, Au, Re ou encore Pt, le $CO_2$ formé est considéré comme une impureté et est éliminé ultérieurement par adsorption sur des zéolites.
- EP-1 138 383, qui propose d'éliminer le CO d'un mélange comportant de l'hydrogène et du CO. Ce document propose l'oxydation de CO en $CO_2$ par une oxydation catalytique en présence de catalyseurs à base de Ru, Ti, $Al_2O_3$. Une injection supplémentaire d'oxygène assure une oxydation complète de CO.

- EP-0832678 qui propose d'éliminer le CO et le $CO_2$ d'un gaz inerte, l'argon. Le CO est oxydé en $CO_2$ par oxydation catalytique à l'aide d'oxygène en excès, en présence de catalyseurs à base de NiO, CuO, ou encore MnO et leurs mélanges, ainsi que de métaux nobles. Le $CO_2$ ainsi formé est considéré comme une impureté et est éliminé ultérieurement par adsorption. Il faut noter par ailleurs que l'oxygène ajouté -qui l'est volontairement en excès- doit également être éliminé en fin de procédé.

Ces documents antérieurs appellent les commentaires suivants :

- l'épuration du CO nécessite l'intervention d'un agent oxydant tel l'oxygène, l'oxydation est réalisée à l'aide de l'oxygène sur catalyseur ;
- ils soulèvent une problématique de coût quand ils concernent l'utilisation de métaux nobles (Pd, Ru, Ti par exemple) ;
- le $CO_2$ généré est considéré comme une impureté à éliminer ;
- l'élimination complète du CO nécessite un excès d'oxygène, qui va à son tour nécessiter une étape ultérieure d'épuration pour être éliminé.

D'autres documents encore proposent l'épuration du CO par adsorption fondée sur élimination sélective des différents constituants par des adsorbants grâce à des interactions spécifiques entre la surface des adsorbants solides et les molécules de gaz à épurer (chimisorption, physisorption). Une des caractéristiques essentielles de la technologie d'adsorption réside dans son fonctionnement cyclique puisque, après une phase d'adsorption, les adsorbants doivent être régénérés partiellement ou complètement en vue de l'utilisation suivante. L'épuration de l'Hélium par adsorption est connue, entre autres, en vue d'éliminer le CO. L'épuration se fait à très basse température (-187°C) à l'aide d'un adsorbant de type zéolite X (alumino-silicate enrichi par des cations tels que: Ag, Cu, Li). On se reportera par exemple au document EP-922480. De telles températures basses requièrent une isolation thermique parfaite et engendrent donc une augmentation des coûts de production.

On le voit donc à la lecture de ce qui précède, il existe un vrai besoin de pouvoir proposer un procédé d'épuration sélective du CO d'un mélange comportant de l'hélium et $CO_2$, tout en préservant la présence de $CO_2$ dans le mélange, économiquement performant, et en évitant notamment la nécessite d'intervention d'agents gazeux oxydants.

Comme on le verra plus en détails ci-dessous, selon la présente invention, le gaz à épurer est un gaz comportant du CO et du $CO_2$, éventuellement en mélange avec un autre gaz, notamment inerte (tel He, $N_2$,..), le mélange étant par exemple utilisé pour une opération de trempe gazeuse, et dans ce dernier cas on procède à cette épuration préférentiellement dans une opération globale de recyclage du gaz de trempe.

Les principales caractéristiques et avantages du procédé d'épuration de CO selon la présente invention peuvent être résumés ainsi :

- l'épuration est sélective, les autres composantes du mélange gazeux (et en particulier le $CO_2$) ne sont pas arrêtées de manière significative
- l'épuration est effectuée préférentiellement sur un gaz comprimé (typiquement 10 à 50 bar) de façon à favoriser les réactions physiques et chimiques conduisant à l'élimination du CO et préférentiellement dans un circuit de recyclage (comme on le verra plus en détails ci-après plus la pression est élevée, plus le rendement d'épuration est élevé).
- le matériau de purification est à base d'oxyde de cuivre (teneur par exemple entre 30 et 60% de CuO).
- le procédé peut être mis en oeuvre à la température ambiante mais de préférence entre 100 et 250°C (ce qui représente on l'aura compris une température modérée) .
- elle ne met en oeuvre ni gaz auxiliaires ni métaux précieux pour réaliser l'épuration, elle met en oeuvre en fait des matériaux de purification peu coûteux (25 à 30 euros/kg) et facilement disponibles.
- elle ne nécessite pas la fabrication de dépôts de couches actives.
- la régénération des matériaux d'épuration se fait par exemple à l'air déshydraté, à pression atmosphérique et en température, préférentiellement à une température sensiblement égale à la température utilisée pour la phase d'épuration ; en effet, ainsi, le matériau d'épuration peut être maintenu à température sensiblement constante pendant toutes les étapes de son fonctionnement. Le seul type de contrôle de température à effectuer est donc un maintien à température constante. Aucune phase de transition d'une température de consigne à une autre n'est nécessaire entre la phase d'épuration et la phase de régénération.
- le seul produit formé est du $CO_2$, déjà présent et souhaité dans le gaz entrant à épurer, et qui ne constitue donc pas un « polluant » dans le contexte de la présente invention.
- le réacteur d'épuration crée une faible perte de charge, et n'entraîne donc pas de nécessité d'une compression supplémentaire.

L'épuration du CO selon la présente invention repose sur l'interaction entre le matériau de purification (oxyde) et les molécules de CO à épurer. En fonction du niveau de la température opératoire choisi, le CO sera piégé dans le volume poreux du matériau de purification et/ou chimisorbé sur l'oxyde de cuivre et/ou oxydé à l'aide de l'oxyde présent dans le matériau de purification. Ainsi, si l'épuration peut être mise en oeuvre à température ambiante, on la mettra en oeuvre selon l'invention à une température supérieure à la température ambiante, et plus préférentiellement entre 150 et 250°C, de façon à mettre en oeuvre durant le contact la réduction du matériau d'épuration par le mélange entrant, conduisant à l'oxydation du CO du mélange entrant en $CO_2$.

En effet, à température ambiante, le mécanisme principal d'épuration est une adsorption du CO sur l'oxyde de cuivre, alors qu'à température plus élevée (par exemple 230°C) vient s'ajouter à ce mécanisme d'adsorption la réduction de l'oxyde de cuivre (par exemple, en $Cu_2O$ ou Cuivre métallique) par le mélange entrant comportant $CO_2$ et CO, conduisant à l'oxydation du CO en $CO_2$ :

$$2\ CO + 2\ CuO \rightarrow CO + CO_2 + Cu_2O \rightarrow 2\ CO_2 + 2\ Cu.$$

On notera donc immédiatement que par rapport à l'état de la technique cité plus haut, où l'oxyde jouait un rôle de catalyseur, selon la présente invention il y a une réaction directe, d'oxydation, entre le CO à épurer et l'oxyde du matériau d'épuration.

Toujours en restant sur l'exemple du cuivre, au cours de la purification à 230°C, le matériau de purification change de couleur - avant la purification, il est de couleur noire (état d'oxydation +II) et après épuration de couleur brune-rouge (état d'oxydation +I ou 0).

La présente invention concerne alors un procédé d'épuration d'un mélange entrant comportant du dioxyde de carbone ($CO_2$) et du monoxyde de carbone (CO), en vue de l'élimination du monoxyde de carbone (CO) contenu dans ce mélange, selon lequel on procède à la mise en contact, à une température supérieure à la température ambiante, du mélange entrant avec un matériau d'épuration comportant au moins un oxyde de cuivre, de façon à réaliser la réduction du matériau d'épuration par le mélange entrant, conduisant à l'oxydation du CO du mélange entrant en $CO_2$.

Comme on l'aura compris à la lecture de ce qui précède, selon la température pratiquée, on observera une part plus ou moins significative de physisorption et/ou chimisorption dans les mécanismes intervenant, mais le mécanisme recherché et dominant selon la présente invention sera dans tous les cas une oxydation directe entre le matériau d'épuration et le CO à épuré.

La présente invention concerne également un procédé de recyclage d'un gaz de procédé utilisé dans un procédé amont mis en oeuvre dans une installation amont, gaz de procédé comportant du dioxyde de carbone ($CO_2$) et du monoxyde de carbone (CO), recyclage effectué en vue de l'élimination du monoxyde de carbone (CO) contenu dans ce mélange, et la réintroduction du gaz ainsi épuré dans ledit procédé amont, selon lequel on dispose d'une ligne principale reliant ladite installation amont à une capacité tampon, en passant par un groupe de compression ou surpression comprenant un ou plusieurs compresseurs/surpresseurs en parallèle, apte à la récupération et à la recompression de tout ou partie du gaz de procédé issu de ladite installation, pour l'amener en contact, à une température supérieure à la température ambiante, avec un matériau d'épuration comportant au moins un oxyde de cuivre, de façon à réaliser la réduction du matériau d'épuration par le gaz de procédé récupéré, conduisant à l'oxydation du CO du gaz de procédé en $CO_2$, le gaz de procédé ainsi épuré étant alors dirigé vers la capacité tampon pour être stocké avant sa re-utilisation dans ledit procédé amont.

La présente invention concerne également un procédé de trempe par gaz, du type où l'on dispose d'une cellule de trempe destinée à recevoir des objets à tremper à l'aide d'un gaz de trempe, et où l'on dispose de moyens de fourniture de gaz de trempe sous pression, raccordés à cette cellule, les moyens de fourniture de gaz comprenant une capacité tampon adaptée pour contenir du gaz de trempe, caractérisé en ce que l'on procède, après une opération de trempe, au recyclage de tout ou partie du gaz contenu dans la cellule de la façon suivante :

- on dispose d'une ligne principale reliant la cellule à la dite capacité tampon en passant par un groupe de compression ou surpression comprenant un ou plusieurs compresseurs/surpresseurs en parallèle;
- on dispose sur la portion de ligne principale située entre le groupe de compression et la capacité tampon, d'au moins une réserve d'un matériau d'épuration comportant au moins un oxyde de cuivre;
- on procède, après une opération de trempe, à une ou plusieurs opérations de vidange partielle du contenu de la cellule à l'aide du groupe de compression, afin de diriger le gaz de trempe récupéré pour l'amener en contact, à une température supérieure à la température ambiante, avec ladite au moins une réserve de matériau d'épuration, de façon à réaliser la réduction du matériau d'épuration par le gaz de trempe récupéré, conduisant à l'oxydation du CO du gaz de trempe en $CO_2$, le gaz de trempe ainsi épuré étant alors dirigé vers la capacité tampon pour y être stocké avant sa re-utilisation dans ledit procédé de trempe gaz.

La présente invention concerne également une installation de trempe par gaz, du type comprenant :

- une cellule de trempe destinée à recevoir des objets à tremper ;

- des moyens de fourniture de gaz de trempe sous pression, raccordés à cette cellule, les moyens de fourniture de gaz comprenant une capacité tampon adaptée pour contenir le gaz de trempe ;
- une ligne principale reliant la cellule à la dite capacité tampon en passant par un groupe de compression ou surpression comprenant un ou plusieurs compresseurs/surpresseurs en parallèle;
- sur la portion de ligne principale située entre le groupe de compression et la capacité tampon, on dispose d'au moins une réserve d'un matériau d'épuration comportant au moins un oxyde de cuivre;

de façon à permettre, après une opération de trempe, de procéder à une ou plusieurs opérations de vidange partielle du contenu de la cellule à l'aide du groupe de compression, afin de diriger le gaz de trempe récupéré pour l'amener en contact, à une température supérieure à la température ambiante, avec ladite au moins une réserve de matériau d'épuration, de façon à réaliser la réduction du matériau d'épuration par le gaz de trempe récupéré, conduisant à l'oxydation du CO du gaz de trempe en $CO_2$, le gaz de trempe ainsi épuré étant alors dirigé vers la capacité tampon pour y être stocké avant sa re-utilisation dans ledit procédé de trempe gaz.

Dans des modes de réalisation préférés de l'invention selon ses différents aspects, on peut éventuellement avoir recours en outre à l'une et/ou à l'autre des dispositions suivantes :

- ledit oxyde de cuivre est du CuO.
- ledit matériau d'épuration comprend au moins 30 % d'un oxyde de cuivre.
- ladite température mise en oeuvre pour la mise en contact est d'au moins 100 °C, préférentiellement d'au moins 150 °C.
- le mélange entrant est à une pression d'au moins 10 bars, préférentiellement d'au moins 20 bars.
- ladite mise en contact est réalisée pendant un temps de contact d'au moins 2 secondes, préférentiellement d'au moins 5 secondes.
  On rappelle que le temps de séjour $\tau$ (ou temps de contact) peut également être défini comme suit :

$$\tau = \frac{V}{A \cdot \dfrac{T}{P \cdot 273,15}}$$

où V est le volume de matériau d'épuration présent dans le réacteur exprimé en litres, A est le débit de gaz qui passe au travers du réacteur d'épuration (en l/s), T est la température d'épuration en Kelvins, P est la pression d'épuration en bars absolus.

- la masse de matériau d'épuration (M) mise en oeuvre pour ladite mise en contact, le volume de gaz $V_{gaz}$ traité entre deux régénérations et la teneur en CO du gaz à épurer (mélange entrant ou gaz de procédé ou gaz de trempe ) sont liés par la relation suivante :

$$\frac{M_{kg}}{CO \cdot Volume\ gaz} \geq 5,$$

de préférence $\geq 10$

L'invention sera mieux comprise à la lecture de la description qui va suivre, donnée uniquement à titre d'exemple et faite en se référant aux dessins annexés sur lesquels :

- la figure 1 est une description schématique d'une installation de trempe gazeuse intégrant une installation d'épuration du CO conforme à l'invention.
- la figure 2 est une description schématique d'un cycle de fonctionnement composé d'une étape d'épuration en CO et d'une étape de régénération du matériau d'épuration .
- la figure 3 et la figure 4 présentent des résultats d'épuration obtenus selon l'invention.

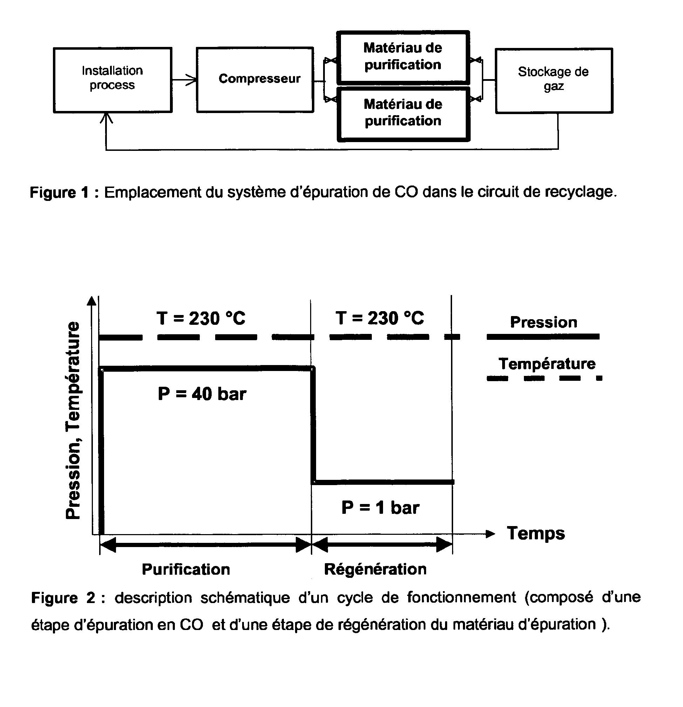

La figure 1 permet de mieux visualiser l'emplacement du système d'épuration dans le circuit de recyclage selon un des modes de réalisation de l'invention. Le gaz sortant de la cellule de trempe (« installation process ») est comprimé à l'aide d'un compresseur (la pression de sortie est de l'ordre de 20 à 50 bar). Afin d'assurer la continuité de fonctionnement, le matériau de purification est réparti en deux zones/réserves distinctes correspondants à deux cartouches du matériau de purification, l'une permet de traiter le gaz récupéré afin d'éliminer l'impureté CO tandis que l'autre est en phase de régénération. Le gaz épuré est récupéré en sortie de réserve d'épuration pour être stocké dans le stockage (capacité tampon) afin d'être réutilisé ultérieurement dans le processus de trempe.

Avant une première utilisation, le matériau de purification doit être activé : l'activation a pour but de déshydrater le matériau de purification. La cartouche contenant le matériau de purification est par exemple chauffée sous azote, par exemple à une température voisine de 200°C, ensuite ce matériau est oxydé (par exemple à l'air sec à une température voisine de 230°C). l'activation n'a besoin d'être effectuée qu'une seule fois pour toute.

Le matériau est alors prêt à être utilisé. Le processus de purification selon l'invention est alors typiquement composé de 2 étapes :

- l'étape d'épuration en CO: le mélange à traiter (comportant notamment $CO_2$ et CO ainsi que de l'Hélium) passe au travers d'une des cartouches, contenant le matériau de purification. Cette étape d'épuration est de préférence mise en oeuvre entre 100 et 250°C, plus préférentiellement à une température supérieure à 150 °C. La cartouche et le matériau sont maintenus à une température constante par un chauffage électrique. Comme on l'a compris précédemment, une partie du CO contenu dans le gaz à épurer est généralement adsorbé (physisorbé ou chimisorbé) sur le matériau; mais majoritairement le reste est oxydé en $CO_2$ par l'oxyde de cuivre CuO (cuivre il qui est donc réduit en cuire 0 ou I). Une partie du $CO_2$ formé est éventuellement adsorbée sur le matériau de purification.

  Toujours en conservant l'exemple de l'oxyde de cuivre CuO, le CO n'est plus arrêté (converti) quand il n'y a plus assez d'oxyde de cuivre dans l'état d'oxydation +II disponible dans le matériau de purification et quand le matériau a atteint sa capacité limite d'adsorption. Il est donc nécessaire d'effectuer régulièrement des opérations de régénération du matériau, qui vont le ramener dans son état initial avant épuration.

- l'étape de régénération du matériau d'épuration : la régénération est en pratique principalement une réoxydation du cuivre 0 ou I (passé dans cet état d'oxydation pendant l'étape d'épuration) en cuivre II; la régénération a également pour but de désorber le CO et éventuellement le $CO_2$ adsorbés par le matériau d'épuration. Cette fonction est assurée par un balayage par exemple à l'air sec, à une température par exemple voisine de 230°C et à une pression par exemple égale à la pression atmosphérique (pendant la régénération, on cherche à maximiser le temps de contact entre le matériau et l'air sec, c'est pourquoi le débit de gaz utilisé pour l'étape de régénération du matériau d'épuration est beaucoup plus faible par rapport au débit de gaz à épurer qui passe à travers le matériau de purification pendant l'étape de purification, dans ces conditions, la pression suffisante pour effectuer la régénération est typiquement la pression atmosphérique, bien sur une éventuelle augmentation de pression de régénération contribuerait a priori à une amélioration de la régénération).

- L'élution de CO chute après environ 20 à 40 minutes de balayage à l'air sec.

Un exemple de cycle de purification et de régénération est présenté plus en détail ci-dessous en liaison avec la figure 2.

On y constate que le matériau d'épuration est maintenu à température constante (par exemple 230°C), pendant toutes les étapes de son fonctionnement (purification et régénération). Le seul type de contrôle de température à effectuer est donc un maintien à température constante.

En ce qui concerne le réglage de la pression dans le réacteur de purification, un changement de la pression de fonctionnement est effectué entre la phase de purification (fonctionnement par exemple à 40 bar) et la phase de régénération (par exemple la pression atmosphérique).

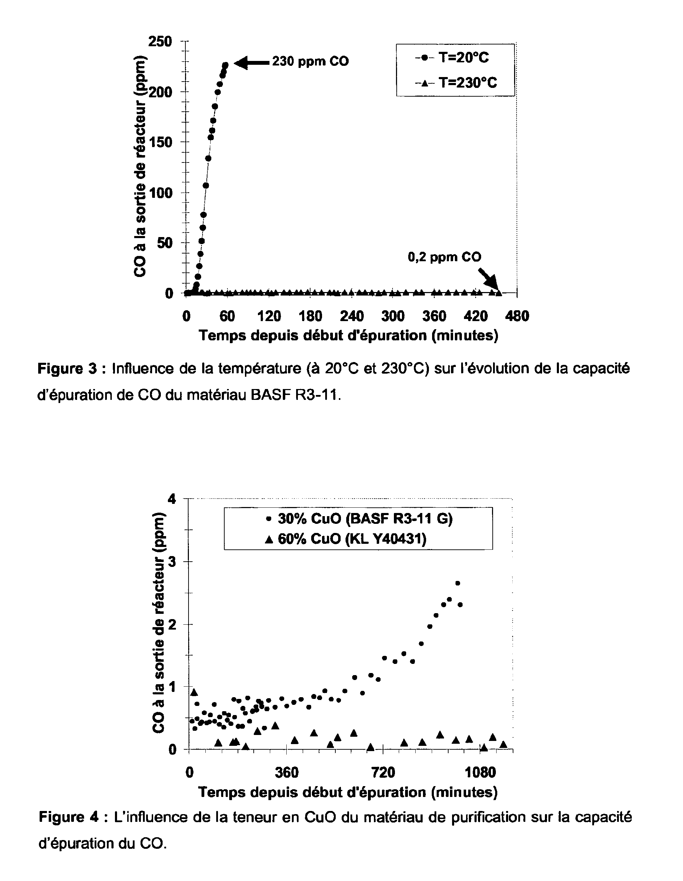

Les figures 3 et 4 ci-après présentent des exemples de résultats obtenus selon l'invention, le gaz à épurer provenant d'une cellule de trempe gazeuse. Ils ont été obtenus dans les conditions expérimentales suivantes :

- Gaz à épurer: le gaz contient une certaine quantité de CO (précisée dans chaque exemple ci-dessous), 60% de $CO_2$ et le reste est constitué d'hélium.
- Pression dans le réacteur d'épuration : 4,5 bar ou 25 bar.
- Débit de gaz à épurer : 180 ou 270 litres/heure.
- Temps de séjour du gaz dans le réacteur d'épuration : 9 ou 25 s.

avec le temps de séjour $\tau$ (ou temps de contact) défini par la relation suivante :

$$\tau = \frac{V}{A \cdot \dfrac{T}{P \cdot 273,15}}$$

où V est le volume de matériau d'épuration présent dans le réacteur exprimé en litres, A est le débit de gaz qui passe au travers du réacteur d'épuration (en l/s), T est la température d'épuration en Kelvins, P est la pression d'épuration en bars absolus.

- Matériau d'épuration : à base de CuO, référence R3-11G de chez BASF (contenant 30% de CuO) et référence Y40431 de chez Kata Leuna (contenant 60% de CuO).
- Température d'épuration : deux températures ont été testées, 20°C et 230°C.

Les résultats obtenus peuvent être résumés ainsi :

A) <u>influence de la température</u>

Des résultats d'épuration du CO à température ambiante et à 230°C est présenté en Figure 3. La teneur initiale en CO dans le mélange à traiter était voisine de 300 ppm, le débit de gaz de 270 l/h, la pression de 4,5 bar et le temps de contact dans le réacteur d'épuration de 25 s. On constate qu'à 25°C, la percée de CO commence après 15 minutes de purification alors qu'à 230°C, la percée n'a pas lieu même après 8 heures de purification. On l'aura compris en observant la figure, la percée est définie comme le temps écoulé depuis le début de la purification à partir duquel le CO n'est plus entièrement arrêté (converti) par le matériau de purification (on commence donc à partir de là à observer du CO en sortie de réacteur). On en conclut que l'augmentation de la température d'épuration améliore la capacité d'épuration du CO.

B) <u>influence de la pression</u>

Des essais réalisés à 20°C à pression plus élevée ont contribué à augmenter significativement le rendement de purification du matériau de purification. Ceci est à relier à l'augmentation du temps de contact entre le matériau de purification et le mélange à épurer, obtenu du fait de cette augmentation de pression, conformément à la formule du temps de contact τ rappelée ci-dessus. En effet, plus la pression d'épuration est élevée, plus le gaz contenant le CO reste longtemps en contact avec le matériau de purification et ainsi plus le rendement d'épuration du CO est élevé.

C) <u>influence de la teneur en CuO du matériau de purification</u>

L'influence de la teneur en CuO du matériau de purification sur la capacité d'épuration du CO est présentée en Figure 4. La teneur initiale en CO du mélange à traiter était voisine de 430 ppm, le débit de gaz de 187 l/h, la pression de 25 bar et le temps de contact dans le réacteur d'épuration de 9 s, l'épuration étant effectuée à une température de 230°C. On constate qu'après 4 heures de purification, la teneur en CO à la sortie de réacteur commence à augmenter pour le matériau de purification contenant 30% de CuO. Celui contenant 60% CuO continue à épurer le CO sans que la percée n'apparaît (l'essai a été arrêté après 20 heures d'épuration).

On en conclut que la performance des matériaux de purification à base de CuO augmente avec leur teneur en CuO.

A titre d'exemple, on a observé qu'un matériau contenant 60% de CuO en masse possède une capacité d'épuration supérieure à 100 Ncm$^3$/g.

Par conséquent, un tel matériau d'épuration, caractérisé par une capacité d'épuration de l'ordre de 100 Ncm$^3$ CO / g de matériau d'épuration, permet de traiter 600 Nm$^3$ de gaz chargé à 500 ppm de CO entre deux régénérations, c'est-à-dire sans saturation du matériau.

D) <u>Sélectivité d'épuration</u>

La Demanderesse a pu vérifier avec une précision de $\pm$ 1% que tant à 20 °C qu'à 230°C, le matériau d'épuration utilisé n'arrête pas le $CO_2$.

E) <u>Durée de régénération</u>

Pendant sa régénération, la quantité de CO élué chute après environ 20 minutes de balayage à l'air sec. On en conclue donc qu'une telle rapidité de régénération permettrait même de n'utiliser une seule cartouche du matériau de purification à la places de deux cartouches.

En conclusion la présente invention permet de supprimer efficacement le monoxyde de carbone contenu dans un flux gazeux en ramenant sa concentration en-dessous de 2 ppm, soit à un niveau quasiment indétectable par la plupart des analyseurs.

La simplicité de mise en oeuvre de l'invention est caractérisée avant tout par l'absence d'utilisation d'un flux gazeux oxydant annexe tel que de l'oxygène pour éliminer le CO: seule, une interaction entre le matériau d'épuration utilisé et le gaz à épurer suffit. Cette caractéristique de l'invention rend de plus inutile l'emploi d'une étape ultérieure d'épuration d'oxygène. Par ailleurs, la méthode d'épuration proposée dans le cadre de la présente invention est mise en oeuvre à des températures modérées, facilement accessibles, sans contrôle complexe. Enfin, la perte de charge liée au système d'épuration décrit dans la présente invention est négligeable si bien qu'aucune étape de compression dédiée spécifiquement à la partie épuration n'est nécessaire dans le cadre de la présente invention.

**Revendications**

1. <u>**Procédé de trempe par gaz**</u>, du type où l'on dispose d'une cellule de trempe destinée à recevoir des objets à tremper à l'aide d'un gaz de trempe, et où l'on dispose de moyens de fourniture de gaz de trempe sous pression, raccordés à cette cellule, les moyens de fourniture de gaz comprenant une capacité tampon adaptée pour contenir du gaz de trempe, **caractérisé en ce que** l'on procède, après une opération de trempe, au recyclage de tout ou partie du gaz contenu dans la cellule de la façon suivante :

   - on dispose d'une ligne principale reliant la cellule à la dite capacité tampon en passant par un groupe de compression ou surpression comprenant un ou plusieurs compresseurs/surpresseurs en parallèle;
   - on dispose sur la portion de ligne principale située entre le groupe de compression et la capacité tampon, d'au moins une réserve d'un matériau d'épuration comportant un oxyde de cuivre ;
   - on procède, après une opération de trempe, à une ou plusieurs opérations de vidange partielle du contenu de la cellule à l'aide du groupe de compression, afin de diriger le gaz de trempe récupéré pour l'amener en contact, à une température supérieure à la température ambiante, avec ladite au moins une réserve de matériau d'épuration, de façon à réaliser la réduction de l'oxyde de cuivre par le gaz de trempe récupéré, conduisant à l'oxydation d'au moins une partie du CO du gaz de trempe en $CO_2$, le gaz de trempe ainsi épuré étant alors dirigé vers la capacité tampon pour y être stocké avant sa re-utilisation ultérieure dans ledit procédé de trempe gaz.

2. Procédé selon la revendication 1, **caractérisé en ce que** ledit oxyde de cuivre est du CuO.

3. Procédé selon la revendication 1 ou 2, **caractérisé en ce que** ledit matériau d'épuration comprend au moins 30 % dudit oxyde de cuivre.

4. Procédé selon l'une des revendications précédentes **caractérisé en ce que** ladite température mise en oeuvre pour la mise en contact est d'au moins 100 °C, préférentiellement d'au moins 150 °C.

5. Procédé selon l'une des revendications précédentes **caractérisé en ce que** le mélange entrant est à une pression d'au moins 10 bars, préférentiellement d'au moins 20 bars.

6. Procédé selon l'une des revendications précédentes **caractérisé en ce que** la dite mise en contact est réalisée pendant un temps de contact d'au moins 2 secondes, préférentiellement d'au moins 5 secondes.

7. Procédé selon l'une des revendications précédentes **caractérisé en ce que** la teneur en CO [CO] dudit mélange entrant ou dudit gaz de procédé ou dudit gaz de trempe, le volume de gaz à traiter entre deux régénérations $V_{gaz}$, et la masse de matériau d'épuration utilisée sont tels que :

$$\frac{M_{kg}}{[CO] \cdot V_{gaz}} \geq 5,$$

de préférence ≥ 10.

8. **<u>Installation de trempe par gaz</u>**, du type comprenant :

- une cellule de trempe destinée à recevoir des objets à tremper ;
- des moyens de fourniture de gaz de trempe sous pression, raccordés à cette cellule, les moyens de fourniture de gaz comprenant une capacité tampon adaptée pour contenir le gaz de trempe ;
- une ligne principale reliant la cellule à la dite capacité tampon en passant par un groupe de compression ou surpression comprenant un ou plusieurs compresseurs/surpresseurs en parallèle;
- sur la portion de ligne principale située entre le groupe de compression et la capacité tampon, on dispose d'au moins une réserve d'un matériau d'épuration comportant un oxyde de cuivre ;

de façon à permettre, après une opération de trempe, de procéder à une ou plusieurs opérations de vidange partielle du contenu de la cellule à l'aide du groupe de compression, afin de diriger le gaz de trempe récupéré pour l'amener en contact, à une température supérieure à la température ambiante, avec ladite au moins une réserve de matériau d'épuration, de façon à réaliser la réduction de l'oxyde de cuivre par le gaz de trempe récupéré, conduisant à l'oxydation d'au moins une partie du CO du gaz de trempe en $CO_2$, le gaz de trempe ainsi épuré étant alors dirigé vers la capacité tampon pour y être stocké avant sa re-utilisation ultérieure dans ledit procédé de trempe gaz.

9. Installation selon la revendication précédente, **caractérisée en ce que** ledit oxyde de cuivre est du CuO.

10. Installation selon la revendication 8 ou 9, **caractérisée en ce que** ledit matériau d'épuration comprend au moins 30 % dudit oxyde de cuivre.

**Claims**

1. Gas quenching method of the type comprising a quenching cell for receiving objects to be quenched using a quenching gas, and comprising pressurized quenching gas supply means, connected to said cell, the gas supply means comprising a buffer vessel suitable for containing quenching gas, **characterized in that**, after a quenching operation, all or part of the gas contained in the cell is recycled as follows:

- a main line connects the cell to said buffer vessel via a group of compressors or boosters comprising one or more compressors/boosters in parallel;
- the portion of main line located between the group of compressors and the buffer vessel comprises at least one reserve of purifying material comprising a copper oxide;
- after a quenching operation, the contents of the cell are partially drained in one or more operations, using the group of compressors, in order to bring the recovered quenching gas into contact, at a temperature above ambient temperature, with said at least one reserve of purifying material, so as to bring about the reduction of the copper oxide by the recovered quenching gas, leading to oxidation of at least part of the CO in the quenching gas to $CO_2$, the quenching gas thereby purified being then sent to the buffer vessel to be stored therein before its subsequent re-use in said gas quenching method.

2. Method according to Claim 1, **characterized in that** said copper oxide is CuO.

3. Method according to either of Claims 1 and 2, **characterized in that** said purifying material comprises at least 30% of said copper oxide.

4. Method according to one of the preceding claims, **characterized in that** said temperature used for the contacting is at least 100°C, preferably at least 150°C.

**5.** Method according to one of the preceding claims, **characterized in that** the input mixture is under a pressure of at least 10 bar, preferably at least 20 bar.

**6.** Method according to one of the preceding claims, **characterized in that** said contacting is brought about for a contact time of at least 2 seconds, preferably of at least 5 seconds.

**7.** Method according to one of the preceding claims, **characterized in that** the CO [CO] content of said input mixture or of said process gas or of said quenching gas, the volume of gas to be treated between two regenerations $V_{gas}$, and the mass of purifying material used are such that:

$$\frac{M_{kg}}{[CO] \cdot V_{gas}} \geq 5,$$

preferably $\geq 10$.

**8.** Gas quenching installation of the type comprising:

- a quenching cell for receiving objects to be quenched;
- pressurized quenching gas supply means, connected to said cell, the gas supply means comprising a buffer vessel suitable for containing the quenching gas;
- a main line connecting the cell to said buffer vessel via a group of compressors or boosters comprising one or more compressors/boosters in parallel;
- the portion of main line located between the group of compressors and the buffer vessel comprises at least one reserve of purifying material comprising a copper oxide;

so that, after a quenching operation, the contents of the cell are partially drained in one or more operations, using the group of compressors, in order to bring the recovered quenching gas into contact, at a temperature above ambient temperature, with said at least one reserve of purifying material, so as to bring about the reduction of the copper oxide by the recovered quenching gas, leading to oxidation of at least part of the CO in the quenching gas to $CO_2$, the quenching gas thereby purified being then sent to the buffer vessel to be stored therein before its subsequent re-use in said gas quenching method.

**9.** Installation according to the preceding claim, **characterized in that** said copper oxide is CuO.

**10.** Installation according to either of Claims 8 and 9, **characterized in that** said purifying material comprises at least 30% of said copper oxide.

**Patentansprüche**

**1.** **Gasabschreckungsverfahren** des Typs, bei dem eine Abschreckungszelle zur Aufnahme von mit Hilfe eines Abschreckungsgases abzuschreckenden Gegenständen und Mittel zur Zuführung von unter Druck stehendem Abschreckungsgas, die an diese Zelle angeschlossen sind, vorgesehen sind, wobei die Gaszuführungsmittel eine zur Aufnahme des Abschreckungsgases geeignete Pufferkapazität umfassen, **dadurch gekennzeichnet, daß** man nach einem Abschreckungsarbeitsgang das in der Zelle enthaltene Gas folgendermaßen ganz oder teilweise rezykliert:

- man sieht eine Hauptleitung vor, die die Zelle über eine Verdichtungs- oder Nachverdichtungsgruppe mit einem oder mehreren parallel geschalteten Verdichtern/Nachverdichtern mit der Pufferkapazität verbindet;
- man an dem zwischen der Verdichtungsgruppe und der Pufferkapazität gelegenen Teil der Hauptleitung mindestens einen Vorrat von Reinigungsmaterial, das ein Kupferoxid umfaßt, vorsieht;
- man nach einem Abschreckungsarbeitsgang einen oder mehrere Arbeitsgänge zur Teilentleerung des Inhalts der Zelle mit Hilfe der Verdichtungsgruppe durchführt, um das zurückgewonnene Abschreckungsgas so zu führen, daß es bei einer über Umgebungstemperatur liegenden Temperatur mit dem mindestens einen Vorrat an Reinigungsmaterial in Berührung kommt, so daß das Kupferoxid durch das zurückgewonnene Abschreckungsgas reduziert wird, was zur Oxidation mindestens eines Teils des CO des Abschreckungsgases zu $CO_2$

führt, wobei das so gereinigte Abschrekkungsgas dann zur Lagerung bis zur nachfolgenden Wiederverwendung bei dem Gasabschreckungsverfahren der Pufferkapazität zugeführt wird.

2. Verfahren nach Anspruch 1, **dadurch gekennzeichnet, daß** es sich bei dem Kupferoxid um CuO handelt.

3. Verfahren nach Anspruch 1 oder 2, **dadurch gekennzeichnet, daß** das Reinigungsmaterial mindestens 30% des Kupferoxids umfaßt.

4. Verfahren nach einem der vorhergehenden Ansprüche, **dadurch gekennzeichnet, daß** die zum Inberührungbringen verwendete Temperatur mindestens 100°C und vorzugsweise mindestens 150°C beträgt.

5. Verfahren nach einem der vorhergehenden Ansprüche, **dadurch gekennzeichnet, daß** das Eingangsgemisch unter einem Druck von mindestens 10 bar und vorzugsweise mindestens 20 bar steht.

6. Verfahren nach einem der vorhergehenden Ansprüche, **dadurch gekennzeichnet, daß** man das Inberührungbringen über eine Kontaktzeit von mindestens 2 Sekunden und vorzugsweise mindestens 5 Sekunden durchführt.

7. Verfahren nach einem der vorhergehenden Ansprüche, **dadurch gekennzeichnet, daß** der CO-Gehalt [CO] des Eingangsgemischs oder des Prozeßgases oder des Abschreckungsgases, das zwischen zwei Regenerationen zu behandelnde Gasvolumen $V_{Gas}$ und die verwendete Reinigungsmaterialmasse so beschaffen sind, daß:

$$\frac{M_{kg}}{[CO] \cdot V_{Gas}} \geq 5,$$

vorzugsweise $\geq 10$.

8. **Gasabschreckungsvorrichtung** des Typs mit:

- einer Abschreckungszelle zur Aufnahme von abzuschreckenden Gegenständen;
- Mitteln zur Zuführung von unter Druck stehendem Abschreckungsgas, die an diese Zelle angeschlossen sind, wobei die Gaszuführungsmittel eine zur Aufnahme des Abschreckungsgases geeignete Pufferkapazität umfassen;
- eine Hauptleitung, die die Zelle über eine Verdichtungs- oder Nachverdichtungsgruppe mit einem oder mehreren parallel geschalteten Verdichtern/Nachverdichtern mit der Pufferkapazität verbindet;
- an dem zwischen der Verdichtungsgruppe und der Pufferkapazität gelegenen Teil der Hauptleitung mindestens einen Vorrat von Reinigungsmaterial, das ein Kupferoxid umfaßt, vorgesehen ist;

so daß nach einem Abschreckungsarbeitsgang ein oder mehrere Arbeitsgänge zur Teilentleerung des Inhalts der Zelle mit Hilfe der Verdichtungsgruppe durchgeführt werden können, um das zurückgewonnene Abschreckungsgas so zu führen, daß es bei einer über Umgebungstemperatur liegenden Temperatur mit dem mindestens einen Vorrat an Reinigungsmaterial in Berührung kommt, so daß das Kupferoxid durch das zurückgewonnene Abschreckungsgas reduziert wird, was zur Oxidation mindestens eines Teils des CO des Abschreckungsgases zu $CO_2$ führt, wobei das so gereinigte Abschreckungsgas dann zur Lagerung bis zur nachfolgenden Wiederverwendung bei dem Gasabschreckungsverfahren der Pufferkapazität zugeführt wird.

9. Vorrichtung nach dem vorhergehenden Anspruch, **dadurch gekennzeichnet, daß** es sich bei dem Kupferoxid um CuO handelt.

10. Vorrichtung nach Anspruch 8 oder 9, **dadurch gekennzeichnet, daß** das Reinigungsmaterial mindestens 30% des Kupferoxids umfaßt.

**Figure 1 :** Emplacement du système d'épuration de CO dans le circuit de recyclage.

**Figure 2 :** description schématique d'un cycle de fonctionnement (composé d'une étape d'épuration en CO et d'une étape de régénération du matériau d'épuration ).

**Figure 3** : Influence de la température (à 20°C et 230°C) sur l'évolution de la capacité d'épuration de CO du matériau BASF R3-11.

**Figure 4** : L'influence de la teneur en CuO du matériau de purification sur la capacité d'épuration du CO.

**EP 1 846 582 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1060774 A
- EP 1138383 A
- EP 0832678 A
- EP 922480 A